(19) Europäisches Patentamt

European Patent Office

Office européen des brevets

(11) **EP 1 004 347 B1**

(12) **EUROPÄISCHE PATENTSCHRIFT**

(45) Veröffentlichungstag und Bekanntmachung des Hinweises auf die Patenterteilung:
**19.07.2006  Patentblatt 2006/29**

(51) Int Cl.:
*B01D 53/94* (2006.01)          *B01J 23/58* (2006.01)
*B01J 23/63* (2006.01)

(21) Anmeldenummer: **99122199.5**

(22) Anmeldetag: **06.11.1999**

(54) **Katalysator für die Reinigung der Abgase eines Dieselmotors**

Catalyst for cleaning exhaust gases from diesel engines

Catalyseur pour purifier les gaz d'échappement de moteurs Diesel

(84) Benannte Vertragsstaaten:
**AT BE CH CY DE DK ES FI FR GB GR IE IT LI LU MC NL PT SE**

(30) Priorität: **27.11.1998  DE 19854794**

(43) Veröffentlichungstag der Anmeldung:
**31.05.2000  Patentblatt 2000/22**

(73) Patentinhaber: **Umicore AG & Co. KG**
**63457 Hanau-Wolfgang (DE)**

(72) Erfinder:
• **Klein, Harald, Dr.**
**63856 Bessenbach (DE)**
• **Strehlau, Wolfgang, Dr.**
**69221 Dossenheim (DE)**

• **Lox, Egert, Dr.**
**63457 Hanau (DE)**
• **Kreuzer, Thomas, Dr.**
**61184 Karben (DE)**
• **Müller, Wilfried**
**61184 Karben (DE)**

(74) Vertreter: **Stellbrink, Axel et al**
**Vossius & Partner**
**Siebertstrasse 4**
**81675 München (DE)**

(56) Entgegenhaltungen:
**EP-A- 0 716 876          EP-A- 0 749 774**
**DE-A- 19 617 123          DE-A- 19 617 124**
**US-A- 5 292 696**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 004 347 B1

**Beschreibung**

Die vorliegende Erfindung betrifft einen Katalysator für die Reinigung der Abgase eines Dieselmotors. Mit dem erfindungsgemäßen Katalysator können die Stickoxide im sauerstoffreichen Abgas eines Dieselmotors unter optimaler Nutzung der im Abgas enthaltenen reduktiven Bestandteile umgesetzt werden.

Dieselmotoren emittieren Abgase, die neben nicht verbrauchtem Sauerstoff und unschädlichen Verbrennungsprodukten wie Wasser und Kohlendioxid zusätzliche Schadstoffe enthalten, die die menschliche Gesundheit gefährden und die Umwelt belasten. Hierzu gehören Kohlenmonoxid CO. unverbrannte Kohlenwasserstoffe HC, Stickoxide $NO_x$ und Partikel. Die Stickoxide werden während der Verbrennung aus dem Stickstoff der Verbrennungsluft gebildet oder entstehen aus stickstoffhaltigen Verbindungen im Kraftstoff. Sie bestehen, je nach Betriebspunkt des Motors, zu etwa 50 bis 90 Vol.-% aus Stickstoffmonoxid NO. Darüber hinaus enthält das Abgas von Verbrennungsmotoren, abhängig vom Schwefelgehalt des Kraftstoffes, auch noch Schwefeldioxid.

Zur Reinhaltung der Luft wurden für die Emission dieser Schadstoffe bestimmte obere Grenzwerte vom Gesetzgeber vorgeschrieben. Die Grenzwerte werden entsprechend den technischen Möglichkeiten von Zeit zu Zeit nach unten korrigiert, um die Schadstoffemissionen zu vermindern. Zur realitätsnahen Prüfung der Schadstoffumsetzung von Abgasreinigungssystemen wurden verschiedene Prüfzyklen festgelegt, die häufig vorkommende Fahrbedingungen simulieren.

Der in Europa gültige Prüfzyklus an einem Fahrzeug wird als MVEG-A Zyklus (Motor Vehicle Emission Group) bezeichnet und besteht aus einem städtischen Fahranteil (ECE) und einem außerstädtischen (EUDC) Anteil. Das zu überprüfende Fahrzeug fährt hierbei an einem Rollenprüfstand den entsprechenden Fahrzyklus ab. Die Schwungmassenräder des Rollenprüfstandes stellen ein Lastkollektiv dar und simulieren das Gewicht des Fahrzeugs. Während des Fahrzyklus werden die emittierten gasförmigen Schadstoffe durch Standardanalyseverfahren (HC: mit einem Flammenionisationsdetektor (FID), CO: mit Infrarotspektroskopie (IR), $NO_x$: mit einem Chemolumineszenzdetektor (CLD)) gemessen und aufsummiert, so daß die Schadstoffemissionen des gesamten Zyklus als Gramm Schadstoff pro gefahrenem Kilometer vorliegen. Diese Emissionen können direkt mit den von der Gesetzgebung vorgegebenen Grenzwerten verglichen werden.

Bezüglich ihrer Abgaszusammensetzung können die heutigen Verbrennungsmotoren in zwei Klassen unterteilt werden. Zum einen gibt es die konventionellen Otto-Motoren, deren Abgas im wesentlichen stöchiometrisch zusammengesetzt ist, und zum anderen die Dieselmotoren und mager betriebene Otto-Motoren, deren Abgas einen Überschuß an Sauerstoff enthält.

Das Abgas von konventionellen Otto-Motoren weist neben den genannten Schadstoffen noch einen Sauerstoffgehalt von etwa 0,7 Vol.-% auf. Es ist stöchiometrisch zusammengesetzt, das heißt oxidative und reduktive Komponenten des Abgases halten sich die Waage und können mit sogenannten Dreiwegkatalysatoren gleichzeitig und nahezu vollständig zu den unschädlichen Komponenten Kohlendioxid, Wasser und Stickstoff umgesetzt werden. Dreiwegkatalysatoren enthalten auf hochoberflächigen Trägeroxiden als katalytisch aktive Komponenten neben Platin und/oder Palladium noch Rhodium, welches besonders die selektive Reduktion der Stickoxide zu Stickstoff unter Verwendung von Kohlenmonoxid und unverbrannten Kohlenwasserstoffen als Reduktionsmittel begünstigt. Voraussetzung für die gleichzeitige Umsetzung der drei Schadstoffe durch einen Dreiwegkatalysator ist die Regelung des dem Motor zugeführten Luft/Kraftstoff-Verhältnisses auf den stöchiometrischen Wert. Dieser beträgt bei üblichen Kraftstoffen 14,6. Es werden also 14,6 Kilogramm Luft für die vollständige Verbrennung von 1 Kilogramm Kraftstoff benötigt.

Im Gegensatz dazu enthält das Abgas von Dieselmotoren und von mager betriebenen Otto-Motoren einen hohen Sauerstoffgehalt von etwa 6 bis 20 Vol.-%, da diese Motoren mit mageren Luft/Kraftstoff-Verhältnissen betrieben werden. Ein großes Problem bei diesen Motoren stellt die Emission der Stickoxide dar. Wegen des hohen Sauerstoffgehaltes des Abgases ist es nicht möglich, die Stickoxide nach dem herkömmlichen Dreiwegverfahren unter Verwendung von Kohlenmonoxid und Kohlenwasserstoffen als Reduktionsmittel umzusetzen. Vielmehr ist die Oxidation von Kohlenmonoxid und Kohlenwasserstoffen im sauerstoffreichen Abgas bevorzugt.

Häufig werden daher die Abgase dieser Motoren nur mit sogenannten Oxidationskatalysatoren oxidativ gereinigt, das heißt Kohlenmonoxid und Kohlenwasserstoffe werden an einem Katalysator durch den Sauerstoff im Abgas zu Wasser und Kohlendioxid oxidiert. Ein solcher Katalysator wird zum Beispiel in der DE 39 40 758 C1 beschrieben. Er zeichnet sich durch eine hohe katalytische Aktivität für die Oxidation von Kohlenmonoxid und Kohlenwasserstoffen aus, während die Weiteroxidation von Stickstoffmonoxid zu Stickstoffdioxid und von Schwefeldioxid zu Schwefeltrioxid weitgehend unterdrückt ist. Dadurch wird auch die Bildung von Sulfaten vermindert, welche die verwendeten Katalysatoren vergiften könnten. Der Katalysator enthält auf hochoberflächigen Trägeroxiden wie Aluminiumoxid, Titanoxid und Siliziumdioxid als katalytisch aktive Komponenten Platin und/oder Palladium, die durch Zusätze von Vanadiumoxid derart in ihrer katalytischen Aktivität modifiziert sind, daß kaum eine Weiteroxidation von Stickstoffmonoxid und Schwefeldioxid zu beobachten ist.

Zur Verminderung der Stickoxide im Abgas dieser Motoren gibt es verschiedene Lösungsansätze. Bei der sogenannten selektiven katalytischen Reduktion (SCR: Selective Catalytic Reduction) werden die Stickoxide im Abgas an einem SCR-Katalysator durch Zugabe von Reduktionsmitteln zum Abgas selektiv reduziert. Als Reduktionsmittel kann der Kraftstoff selber verwendet werden. Optimale Ergebnisse werden mit Ammoniak als Reduktionsmittel erzielt, welcher zum Beispiel durch Hydrolyse von Harnstoff an Bord des Fahrzeugs erzeugt werden kann. Ein solches Verfahren wird in der DE 42 03 807 A1 beschrieben. Ein geeigneter SCR-Katalysator wird in der EP 0 410 440 B1 genannt. Er besteht aus einer innigen Mischung der Oxide von Titan, Eisen, Vanadium, Molybdän, Wolfram und verschiedener anderer Zusätze.

Die selektive katalytische Reduktion kann wirtschaftlich nur bei großen Dieselmotoren in Lastkraftwagen eingesetzt werden. Deshalb wurde für die Reduktion der Stickoxide im Abgas von mager betriebenen Otto-Motoren in den letzten Jahren die Verwendung von sogenannten Stickoxid-Speicherkatalysatoren vorgeschlagen. Hierbei werden die Stickoxide am Speicherkatalysator durch Platingruppenmetalle zu Stickstoffdioxid aufoxidiert und von einem basischen Speichermaterial in Form von Nitraten gespeichert. Nach Erschöpfung' der Speicherkapazität des Katalysators muß er regeneriert werden. Die Regeneration wird durch Umschalten des Motorbetriebs von einem mageren Luft/Kraftstoff-Gemisch auf ein fettes, das heißt reduzierendes, Luft/Kraftstoff-Gemisch eingeleitet. In der reduzierenden Abgasatmosphäre werden die abgespeicherten Nitrate unter Freisetzung von Stickoxiden zersetzt, welche unter den reduzierenden Abgasbedingungen an den Platingruppenmetallen zu Stickstoff umgesetzt werden. Bei diesem Verfahren werden also wie auch beim SCR-Verfahren aktiv Reduktionsmittel in Form von zusätzlichem Kraftstoff eingesetzt. Hierzu ist eine geeignete Motorelektronik erforderlich, die periodisch von magerer Fahrweise auf fette Fahrweise umschaltet.

Die EP 0 669 157 A1 beschreibt ein solches System. Als Speichermaterial für die Stickoxide werden basische Materialien wie Alkalimetalloxide, Erdalkalimetalloxide und Seltenerdoxide verwendet. Zusätzlich enthält der Speicher-Katalysator Platin und/oder Palladium auf einem hochoberflächigen Trägeroxid.

Zur Verbesserung der Abgasreinigung und zur Erhöhung der Schwefelresistenz sind verschiedene Kombinationen von Speicherkatalysatoren mit anderen Katalysatoren bekannt geworden. So beschreibt die EP 0 716 876 A1 einen Katalysator, der auf einem Tragkörper zwei poröse aufweist. Die erste Trägerschicht enthält Barium als Speichermaterial für die Stickoxide sowie Palladium. Die zweite Trägerschicht liegt auf der ersten Trägerschicht und enthält Platin, welches Stickstoffmonoxid im mageren Abgas zu Stickstoffdioxid oxidiert und damit die Abspeicherung der Stickoxide durch die erste Schicht verbessert. Im stöchiometrisch zusammengesetzten oder fetten Abgas werden die in der ersten Schicht gespeicherten Stickoxide desorbiert und durch Palladium und Platin zu elementarem Stickstoff reduziert. Palladium in der ersten Schicht soll das Speichermaterial vor Vergiftung durch Schwefeldioxid schützen. Als Trägermaterialien für die erste als auch für die zweite Trägerschicht nennt die EP 0 716 876 A1 Aluminiumoxid, Siliciumdioxid, Aluminiumsilicat, Titanoxid und ähnliche. Bevorzugt wird für beide Trägerschichten Aluminiumoxid als Trägermaterial eingesetzt.

Ebenfalls zur Verbesserung der Schwefelresistenz des Speichermaterials beschreibt die EP 0 664 147 A2 einen Katalysator, welcher in Strömungsrichtung des Abgas zuerst einen ersten Katalysator aus einem Edelmetall auf einem porösen, sauren Trägermaterial, einen zweiten Katalysator aus einem Speichermaterial für Stickoxide und einen dritten Katalysator aus einem Edelmetall auf einem porösen Trägermaterial aufweist. Das im mageren Abgas enthaltene Schwefeldioxid wird vom ersten Katalysator weder adsorbiert noch oxidiert und kann daher den zweiten Katalysator ohne die Bildung von Sulfaten passieren. Im fetten oder stöchiometrisch zusammengesetzten Abgas werden die gespeicherten Stickoxide vom zweiten Katalysator freigesetzt und am dritten Katalysator zu elementarem Stickstoff reduziert. Als poröse, saure Trägermaterialien für den ersten Katalysator werden $SiO_2$, $ZrO_2$, $SiO_2$-$Al_2O_3$ und $TiO_2$ vorgeschlagen.

Die WO 97/02886 beschreibt eine Zusammensetzung für die Umsetzung der Stickoxide in Abgasen, die einen Katalysator für die Umsetzung der Stickoxide und ein die Stickoxide sorbierendes Material eng benachbart zueinander enthält. Der Katalysator für die Umsetzung der Stickoxide weist eine hochdisperse Platinmetallkomponente auf einem ersten Trägermaterial auf. Das die Stickoxide sorbierende Material enthält ein basisches Metalloxid, welches von der Platingruppenmetallkomponente separiert ist. In einer bevorzugten Ausführungsform ist der Katalysator für die Umsetzung der Stickoxide in Form einer ersten Beschichtung auf einem Tragkörper aufgebracht. Das die Stickoxide sorbierende Material ist in diesem Fall in Form einer zweiten Beschichtung auf die erste Beschichtung aufgebracht. Die beiden Schichten können auch gegeneinander vertauscht sein. Als Speicherverbindungen werden Metalloxide, Metallhydroxide, Metallcarbonate und Metall-Mischoxide beschrieben. Die Metalle können Lithium, Natrium, Kalium, Rubidium, Cäsium, Magnesium, Calcium, Strontium oder Barium sein. Das die Stickoxide sorbierende Material kann zum Schutz vor Vergiftung durch Schwefel eine Schwefel absorbierende Komponente enthalten, bevorzugt Ceroxid. Dieses Ceroxid kann in Form von Partikeln neben den Partikeln des Speichermaterials vorliegen oder in der Stickoxid-Speicherverbindung dispergiert sein.

Zur Entfernung der Stickoxide aus den Abgasen mit der Katalysatoranordnung gemäß WO 97/02886 wird die Zusammensetzung des Abgases periodisch zwischen mager und stöchiometrisch, beziehungsweise fett, durch entsprechende Steuerung des Luft/Kraftstoff-Verhältnisses hin- und hergeschaltet.

Die WO 97/43031 schlägt ein Verfahren zur Entfernung der Stickoxide aus dem Abgas insbesondere von Dieselmotoren vor. Hierbei wird das Abgas zuerst über einen Stickoxid-Speicher und anschließend über einen Stickoxid-ReduktionsKatalysator geleitet. Der Stickoxid-Speicher enthält eine Kombination aus einem Oxidationskatalysator und einem Speichermaterial. Vor dem Stickoxid-Speicher werden periodisch Kohlenwasserstoffe in das Abgas eingedüst, um die sorbierten Stickoxide thermisch zu desorbieren. Ohne weitere Maßnahmen führt dies zu einem mittleren Stickoxidumsatz von Null. Zusätzlich müssen daher vor dem Reduktionskatalysator erneut Kohlenwasserstoffe in das Abgas eingedüst werden, um einen Netto-Umsatz der Stickoxide zu erhalten.

Die vor dem Stickoxid-Speicher eingedüsten Kohlenwasserstoffe werden gemäß der WO 97/43031 am Oxidationskatalysator des Stickoxid-Speichers verbrannt. Sie werden in ihrer Menge so bemessen, daß die Zusammensetzung des Abgases mager bleibt, aber die bei der Verbrennung am Stickoxid-Speicher freigesetzte Wärme ausreicht, um die gespeicherten Stickoxide thermisch zu desorbieren.

Die bekannten Verfahren zum Betreiben von Speicherkatalysatoren erfordern also alle eine periodische Anhebung des Kohlenwasserstoffgehaltes des Abgases, um die gespeicherten Stickoxide entweder unter fetten oder stöchiometrischen Abgasbedingungen zu zersetzen oder durch Temperaturerhöhung am Speicherkatalysator thermisch zu desorbieren. Die Anhebung des Kohlenwasserstoffgehaltes des Abgases erfolgt dabei entweder durch Verringern des dem Motor zugeführten Luft/Kraftstoff-Verhältnisses oder durch Eindüsen von Kraftstoff hinter dem Motor in die Abgasanlage.

Diese aktiven Verfahren zur Verminderung der Stickoxidemissionen von mager betriebenen Motoren sind insoweit sie eine Anfettung des Luft/Kraftstoff-Gemisches erfordern für den Einsatz an Dieselmotoren ungeeignet, da diese nur mit einem konstant mageren Luft/Kraftstoff-Gemisch einwandfrei arbeiten. Die aktiven Verfahren führen durch die Anfettung des Luft/Kraftstoff-Gemisches oder durch die Eindüsung von Kraftstoff in das Abgas zu einem erhöhten Kraftstoffverbrauch.

Der erhöhte Kraftstoffverbrauch sollte insbesondere bei Dieselmotoren vermeidbar sein, da diese Motoren relativ geringe Stickoxidemissionen aufweisen. Die im Abgas von Dieselmotoren immer noch enthaltenen unverbrannten Kohlenwasserstoffe, Kohlenmonoxid und Wasserstoff stellen nämlich im Mittel eine ausreichende Menge an Reduktionsmitteln dar, um die geringen Stickoxidimissionen weitgehend zu reduzieren.

Daher wird bei Dieselmotoren versucht, die Verminderung der Stickoxide auch ohne Anfettung des Abgases nur unter Verwendung der sowieso im Abgas enthaltenen reduktiven Bestandteile zu verbessern. Einen geeigneten Katalysator hierfür beschreibt die DE 196 14 540. Wegen der geringen Selektivität der Stickoxidreduktion und aufgrund der konkurrierenden direkten Oxidation der reduktiven Bestandteile durch den hohen Sauerstoffgehalt des Abgases sind die hierbei erzielbaren Umsetzungsgrade gering. Nur unter optimalen Bedingungen, das heißt bei einem gleichmäßig hohen Anteil von Kohlenwasserstoffen im Abgas, werden Umsetzungsraten von 60% erzielt. Über den sogenannten Prüfzyklus MVEG-A erlaubt ein solcher Katalysator jedoch nur eine Umsetzung von etwa 14%.

In der DE-A-196 17 124 wird ein Abgasreingungskatalysator beschrieben, der zur kontrolle des Emissionsniveaus von Stickdioxiden (NOx), Kohlenwasserstoffen (HC) und Kohlenmonoxid (CO) geeignet ist.

Aufgabe der vorliegenden Erfindung ist es daher, einen Katalysator für die Reinigung des kontinuierlich mageren Abgases von Dieselmotoren anzugeben, welcher eine bessere Ausnutzung der im Abgas enthaltenen reduktiven Komponenten für die Reduktion der Stickoxide ermöglicht und auf diese Weise zu einer höheren, über die in der Praxis vorkommenden Fahrzyklen gemittelte, Stickoxidreduktion führt als bekannte Reduktionskatalysatoren.

Diese Aufgabe wird durch einen Katalysator gemäß Anspruch 1 für die Reinigung der Abgases eines Dieselmotors gelöst, welcher zwei übereinanderliegende Funktionsschichten auf einem inerten Tragkörper enthält, wobei die erste direkt auf dem Tragkörper liegende Schicht eine Stickoxid-Speicherfunktion aufweist und die zweite, direkt mit dem Abgas in Kontakt stehende Schicht, eine katalytische Funktion besitzt, wobei die zweite Funktionsschicht zusätzlich eine Kohlenwasserstoff-Speicherfunktion aufweist und ihre katalytische Funktion durch katalytisch aktive Edelmetalle der Platingruppe bereitgestellt wird, die in hochdisperser Form auf feinteiligen, sauren Trägermaterialien abgeschieden sind.

Als Funktionsschichten werden im Rahmen dieser Erfindung Dispersionsbeschichtungen auf einem inerten Tragkörper versanden, die ein vorbeiströmendes Abgas in seiner chemischen Zusammensetzung verändern können. Die Veränderungen können darin bestehen, daß bestimmte Abgaskomponenten durch Adsorption an Bestandteilen der Funktionsschichten mindestens vorübergehend aus dem Abgas entfernt werden. So sind Speichermaterialien für Stickoxide bekannt, die die Stickoxide aus dem Abgas in Form von Nitraten speichern. Ebenso sind Zeolithe für die Speicherung von im Abgas enthaltenen Kohlenwasserstoffen bekannt.

Eine weitere Beeinflussung der chemischen Zusammensetzung eines vorbeiströmenden Abgases besteht darin, daß bestimmte Schadstoffe mit anderen Komponenten des Abgases bei Kontakt mit den Bestandteilen der Funktionsschicht zu unschädlichen Produkten umgesetzt werden. Diese katalytische Funktion wird von den Edelmetallen der Platingruppe, insbesondere von Platin, Palladium, Rhodium und Iridium erbracht, die zur vollen Entfaltung ihrer katalytischen Aktivität in hochdisperser Form auf feinteiligen Trägermaterialien abgeschieden werden. Ihre katalytische Aktivität kann durch Zugabe von sogenannten Promotoren beeinflußt werden. Dabei handelt es sich zumeist um Verbindungen von Unedelmetallen.

Zur Kennzeichnung des Typs der katalytischen Aktivität wird häufig von Oxidations- Reduktions- oder Dreiwegkatalysatoren gesprochen. Diese drei katalytischen Funktionen lassen sich jedoch nicht eindeutig voneinander trennen. Welche Funktion sich bei gegebener Zusammensetzung der Funktionsschicht tatsächlich ausprägt, hängt auch von der Zusammensetzung des Abgases ab. Ein Dreiwegkatalysator kann nur dann Kohlenmonoxid, Kohlenwasserstoffe und Stickoxide gleichzeitig umsetzen, wenn das Abgas stöchiometrisch zusammengesetzt ist. Damit ein sogenannter Reduktionskatalysator seine Reduktionsaktivität entfalten kann, muß das Abgas genügend Reduktionskomponenten, das heißt Kohlenmonoxid, Kohlenwasserstoffe und Wasserstoff, enthalten. Die Reduktionskomponenten werden dabei oxidiert.

Unter einem feinteiligen Material wird im Rahmen dieser Erfindung ein pulverförmiges Material verstanden, das in den Katalysator als solches eingebracht wird. In der englischsprachigen Patentliteratur wird hierfür der Begriff "bulk material" oder "particulate material" verwendet. Diese Materialien werden häufig als Trägermaterialien für katalytisch aktive Komponenten oder andere hochdisperse Bestandteile des Katalysators eingesetzt. Zu diesem Zweck müssen die Trägermaterialien eine hohe spezifische Oberfläche (auch BET-Oberflächen, gemessen zum Beispiel nach DIN 66132) für die Aufnahme dieser Komponenten aufweisen. Im Rahmen dieser Erfindung werden die feinteiligen Materialien als hochoberflächig bezeichnet, wenn ihre spezifische Oberfläche mehr als 10 $m^2$/g beträgt.

Von den feinteiligen Materialien sind die hochdispersen Materialien zu unterscheiden. Hochdisperse Materialien können zum Beispiel durch Imprägnieren auf feinteiligen, hochoberflächigen Trägermaterialien abgeschieden werden. Hierzu werden die Trägermaterialien mit in der Regel wasserlöslichen Vorläuferverbindungen der hochdispersen Materialien imprägniert. Durch eine entsprechende Temperaturbehandlung werden die Vorläuferverbindungen dann in die hochdispersen Materialien überführt. Die Partikelgröße dieser hochdispersen Materialien liegt bei etwa 5 bis 50 nm.

Mit Speicherkomponenten werden im Rahmen diese Erfindung die Elemente der Alkali- und Erdalkalimetalle bezeichnet. Bevorzugt handelt es sich dabei um Kalium, Rubidium, Cäsium, Magnesium, Calcium, Strontium und Barium. Sie bilden stark basische Oxide, die die Stickoxide binden können. Die Oxide der Speicherkomponenten werden daher auch als Speicherverbindungen oder aktive Speicherverbindungen bezeichnet. Unter dem Begriff Speicherverbindung werden hier aber auch die Reaktionsprodukte der Oxide mit Luft beziehungsweise den Abgaskomponenten zu Carbonaten und Hydroxiden verstanden, die ebenfalls in der Lage sind, Stickoxide zu speichern. Die Speicherfähigkeit der Speicherverbindungen ist im allgemeinen um so größer je stärker ihre Basizität ist.

Von den Speicherverbindungen sind die Speichermaterialien zu unterscheiden. Bei den Speichermaterialien handelt es sich um geträgerte Speicherverbindungen, das heißt um in hochdisperser Form auf geeigneten Trägermaterialien abgeschiedene Speicherverbindungen. Im Rahmen dieser Erfindung werden aber auch Speicherverbindungen, die in feinteiliger Form vorliegen, als Speichermaterialien bezeichnet.

Nach dieser Klarstellung der verwendeten Begriffe wird im folgenden die Erfindung eingehend erläutert:

Der erfindungsgemäße Katalysator weist über einer ersten Funktionsschicht, die eine Stickoxid speichernde Funktion besitzt, eine zweite Funktionsschicht auf, die sowohl katalytisch aktiv ist, als auch die im mageren Abgas enthaltenen Kohlenwasserstoffe absorbieren kann. Dabei ist es für die Funktion des erfindungsgemäßen Katalysators wesentlich, daß es sich bei den Trägermaterialien für die katalytisch aktiven Komponenten um saure Trägermaterialien handelt.

Geeignete, saure Trägermaterialien für die katalytisch aktiven Komponenten der zweiten Funktionsschicht sind zum Beispiel Aluminiumsilicate, Siliciumdioxid, Titanoxid und Zirkonoxid. Aluminiumoxid ist als Trägermaterial in der zweiten Funktionsschicht wegen seines amphoteren Charakters und seiner geringen Acidität weniger geeignet. Aluminiumsilicate mit einem Siliciumdioxidgehalt von 1 bis 40 Gew.-%, bezogen auf das Gesamtgewicht des Aluminiumsilicats, haben sich als Trägermaterialien für die vorliegende Erfindung besonders bewährt. Als katalytisch aktive Komponenten sind Platin und/oder Palladium besonders geeignet. Bevorzugt wird nur Platin verwendet.

Zur Verstärkung des sauren Charakters der zweiten Funktionsschicht und zur Speicherung von Kohlenwasserstoffen werden Zeolithe in der sauren H-Form mit einem Modul (Molverhältnis von Siliciumdioxid zu Aluminiumoxid) von mehr als 20 eingesetzt.

Wesentlich für die Wirkung des erfindungsgemäßen Katalysators ist die Anreicherung von Stickoxiden und Kohlenwasserstoffen im Katalysator in enger Nachbarschaft mit den katalytisch aktiven Zentren. Dies führt zu einer deutlichen Aktivitätssteigerung gegenüber reinen Oxidationskatalysatoren und reinen Speicherkatalysatoren. Die Anreicherung erfolgt durch die Stickoxid-Speichermaterialien in der ersten Schicht und durch die Kohlenwasserstoff-Speichermaterialien in der zweiten Schicht. Die makroskopisch meßbaren Desorptonstemperaturen der beiden Adsorbermaterialien sind mit etwa 200°C für die Kohlenwasserstoffe und mit etwa 400°C für die Stickoxide sehr unterschiedlich. Aber auch unterhalb der makroskopischen Desorptionstemperatur der Stickoxide von 400°C kommt es mikroskopisch ständig zu Adsorptions- und Desorptionsprozesse, die zur Reduktion der Stickoxide mit den gleichzeitig freigesetzten Kohlenwasserstoffen an den katalytisch aktiven Zentren und somit zu einer Entfernung der Stickoxide aus dem Adsorptions/Desorptionsgleichgewicht führen.

Die beschriebenen Prozesse werden begünstigt, wenn die Abgastemperatur unterhalb der makroskopischen Desorptionstemperatur der Stickoxide liegt. Eine forcierte, thermische Desorption der Stickoxide durch Abgastemperaturen oberhalb von etwa 400°C ist unerwünscht, da dann nicht mehr ausreichend Kohlenwasserstoffe für die Reduktion zur Verfügung stünden.

Diesem niedrigen Temperaturbereich kommt die Tatsache entgegen, daß moderne, direkteinspritzende Dieselmotoren auch bei hoher Belastung selten Abgastemperaturen über 350 bis 400°C aufweisen. Während der überwiegenden Dauer der Betriebszustände dieser Dieselmotoren liegt ihre Abgastemperatur also unter 400°C. Im Teillastbereich weisen diese Motoren sogar nur Abgastemperaturen zwischen 100 und 250°C auf. Aber auch bei konventionellen Dieselmotoren mit höheren Abgastemperaturen kann der erfindungsgemäße Katalysator eingesetzt werden, wenn er an einem vom Motor entfernten Ort in der Abgasanlage angeordnet wird, an dem die Temperatur des Abgases entsprechend abgekühlt ist.

Für die zweite Funktionsschicht werden Zeolithe allein oder in Mischung verwendet, die in der sauren H-Form vorliegen und ein Molverhältnis (Modul) von Siliciumdioxid zu Aluminiumoxid von mehr als 20 aufweisen. Besonders geeignet sind dealuminierter Y-Zeolith, Zeolith ZSM5 oder dealuminierter Mordenit.

Das erfindungsgemäße Verfahren nutzt die mikroskopischen Adsorptions- und Desorptionsprozesse der Stickoxide bei niedrigen Temperaturen. Begünstigt wird dieses Verhalten durch die Verwendung von Stickoxid-Speichermaterialien, die die Stickoxide nur adsorptiv binden.

Die bekannten Konzepte der Stickoxid-Speicherkatalysatoren beschreiten dagegen einen anderen Weg. Sie basieren wesentlich darauf, daß die Stickoxide durch Reaktion mit den Speichermaterialien in Form von Nitraten gespeichert werden. Zur Zersetzung dieser Nitrate gibt es zwei Möglichkeiten. Zum einen kann die Abgaszusammensetzung von mager auf fett beziehungsweise stöchiometrisch umgeschaltet werden. Unter diesen Abgasbedingungen werden die Nitrate schon bei Temperaturen um 400°C zersetzt. Diese Möglichkeit scheidet jedoch wegen des konstant mageren Luft/Kraftstoff-Verhältnisses von Dieselmotoren aus. Zum anderen ist eine thermische Zersetzung der Nitrate unter mageren Abgasbedingungen möglich. Hierfür sind jedoch Temperaturen oberhalb von 400°C notwendig.

Im erfindungsgemäßen Katalysator wird dagegen der überwiegende Teil der Stickoxide in der ersten Funktionsschicht hauptsächlich nur lose als Stickstoffmonoxid adsorbiert. Voraussetzung hierfür ist, daß die Stickoxide bei der Diffusion durch die zweite, obere Funktionsschicht nur im geringen Maße zu Stickstoffdioxid oxidiert werden. Dies kann durch die erfindungsgemäße Verwendung von sauren Trägermaterialien für die katalytisch aktiven Platinmetalle erreicht werden.

Nachdem das Abgas durch die zweite Funktionsschicht diffundiert ist, gelangt es mit nur geringfügig erhöhtem Anteil an Stickstoffdioxid in die darunterliegende erste Funktionsschicht. Hier wird das im Abgas enthaltene Stickstoffmonoxid an den Speicherverbindungen nur lose, physikalisch adsorbiert.

Die zweite Funktionsschicht hat also einen wesentlichen Anteil daran, daß die Stickoxide in der ersten Funktionsschicht nur locker gebunden werden. Als Stickoxid-Speicherverbindungen der ersten Funktionsschicht können daher alle aus dem Stand der Technik bekannten Speicherverbindungen eingesetzt werden, das heißt also basische Speicherverbindungen der Alkalimetalloxide, Erdalkalimetalloxide und der Seltenerdmetalle. Bevorzugt werden Speicherverbindungen von Kalium, Rubidium, Cäsium, Magnesium, Calcium, Strontium und Barium eingesetzt. Zusätzlich kann die erste Funktionsschicht basische Oxide der Übergangsmetalle aus der Gruppe Mangan, Cobalt, Kupfer, Zink, Zinn, Blei, Zirkon, oder Kombinationen davon enthalten.

Die lose Bindung der Stickoxide in der ersten Funktionsschicht kann jedoch auch noch durch geeignete Materialauswahl unterstützt werden. Es wurde gefunden, daß Speicherverbindungen, die auf feinteiligen Trägermaterialien auf der Basis von Ceroxid abgeschieden sind, die Stickoxide nur lose binden und eine merkliche Desorption schon bei relativ niedrigen Abgastemperaturen einsetzt.

In dem hier interessierenden Arbeitstemperaturbereich bis 400°C und den konstant mageren Abgasbedingungen eignen sich als Trägermaterialien reines Ceroxid sowie auch dotiertes Ceroxid und Cer/Zirkon-Mischoxide. Dotiertes Ceroxid und Cer/Zirkon-Mischoxide sind immer dann vorzuziehen, wenn das Material thermisch gegen zufällig auftretende hohe Abgastemperaturen von mehr als 400°C stabilisiert werden soll. Bei hohen Abgastemperaturen besteht nämlich die Gefahr, daß das Speichermaterial mit dem Trägermaterial chemisch reagiert und damit seine Speicherfähigkeit verliert.

Zur thermischen Stabilisierung kann das Ceroxid durch Dotieren mit einem Oxid der Elemente aus der Gruppe gebildet aus Silicium, Scandium, Yttrium und den Seltenerdmetallen (Lanthan, Praseodym, Neodym, Promethium, Samarium, Europium, Gadolinium, Terbium, Dysprosium, Holmium, Erbium, Thulium, Ytterbium und Luthetium) oder Mischungen ihrer Oxide stabilisiert werden. Hierzu sind 0,5 bis 20, bevorzugt 5 bis 10 Gew.-%, des jeweiligen Oxids oder der Oxidmischung notwendig. Die Konzentrationsangabe bezieht sich hierbei auf das Gesamtgewicht des stabilisierten Ceroxids. Die Dotierung kann nach an sich bekannten Verfahren, wie zum Beispiel Co-Fällen, Co-Thermohydrolyse, Imprägnieren und Auffällen, erfolgen.

Die ebenfalls bevorzugt als Trägermaterialien für die Speicherverbindungen einzusetzenden Cer/Zirkon-Mischoxide sind kommerziell mit einem weiten Mischungsverhältnis von Ceroxid zu Zirkonoxid erhältlich und finden ebenso wie reines Ceroxid weite Verbreitung als Sauerstoff-Speichermaterialien in konventionellen Dreiwegkatalysatoren. Die Herstellung der Cer/Zirkon-Mischoxide kann zum Beispiel über mechanisches Mischen oder Imprägnierungs- und Co-Fällungstechniken erfolgen. Im Rahmen der vorliegenden Erfindung sind die hervorragenden Eigenschaften dieser Materialien als Trägermaterialien für die Speicherverbindungen wichtig. Ihre Sauerstoffspeicherfähigkeit ist von geringerer Bedeutung.

Besonders günstige Eigenschaften als Trägermaterialien für Speicherverbindungen weisen die Cer/Zirkon-Mischoxide dann auf, wenn der Gehalt des Mischoxides an Zirkonoxid 30, bevorzugt 20 Gew.-%, bezogen auf das Gesamtgewicht des Mischoxides, nicht übersteigt. Um dem Ceroxid eine gute thermische Stabilität zu verleihen, sollte der Gehalt des Mischoxides an Zirkonoxid jedoch 1 Gew.-% nicht unterschreiten. Besonders vorteilhaft sind Zirkonoxidgehalte zwischen 5 und 15 Gew.-%. Sehr gute Ergebnisse konnten mit einem Gehalt von 10 Gew.-% Zirkonoxid erzielt werden. Oberhalb von 30 Gew.-% Zirkonoxid ist das Ceroxid nicht mehr in der Lage, das Zirkonoxid bei hohen Temperaturen vor einer Reaktion mit den Speicherkomponenten abzuschirmen. Ein Cer/Zirkon-Mischoxid mit 30 Gew.-% Zirkonoxid ist daher unter Betriebsbedingungen mit hohen Abgastemperaturen nicht mehr als Trägermaterial für die Speicherverbindungen geeignet.

Durch die Kombination der erfindungsgemäßen Merkmale weist der beschriebene Katalysator über praktische Fahrzyklen gemittelte Umsetzungsraten für die Stickoxide im sauerstoffhaltigen Abgas von Dieselmotoren von 20 bis 30% auf. Sie sind damit gegenüber dem Stand der Technik wesentlich erhöht. Diese Umsetzungsraten werden erzielt, ohne von Zeit zu Zeit eine Regeneration der Speicherverbindungen im fetten Abgasgemisch vornehmen zu müssen, das heißt der Motor kann kontinuierlich mit einem mageren Luft/Kraftstoff-Gemisch betrieben werden.

Darüber hinaus zeichnet sich die erfindungsgemäße Kombination durch einen sehr niedrigen Arbeitstemperaturbereich von 120 bis 400°C aus und zeigt neben der beobachteten relativ hohen Stickoxidumsetzung auch sehr gute Umsetzungen von Kohlenmonoxid, Kohlenwasserstoffen und Partikeln.

Ein weiterer Vorteil des Katalysators ist seine hohe Resistenz gegenüber einer Vergiftung der Speicherverbindungen durch Schwefeloxide. Diese Vergiftungsresistenz beruht auf den sauren Materialien der zweiten Funktionsschicht, die eine Oxidation des im Abgas enthaltenen Schwefeldioxids unterdrücken und eine Diffusionsbarriere bilden.

Die Erfindung wird an Hand der folgenden Figuren noch näher erläutert. Es zeigen:

**Figur 1:**     Schichtaufbau des erfindungsgemäßen Katalysators

**Figur 2:**     Stickstoffdioxidbildung durch die Katalysatoren der zweiten Funktionsschicht

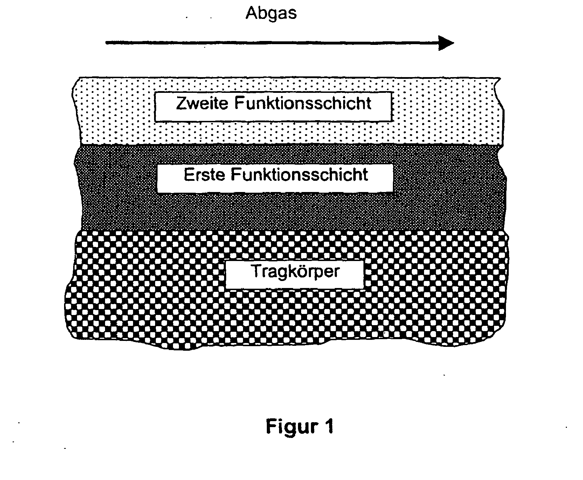

Die beiden Funktionsschichten des Katalysators werden gemäß Figur 1 auf einen inerten Tragkörper aufgebracht. Als Tragkörper werden die bekannten Wabenkörper aus Keramik oder Metall verwendet, welche über ihren Querschnitt eine Vielzahl von Strömungskanälen für das Abgas aufweisen. Die Beschichtungen werden durch bekannte Verfahren auf die Wandflächen der Strömungskanäle aufgebracht. Die Zelldichte dieser Wabenkörper, das heißt die Anzahl der Strömungskanäle pro Querschnittsfläche, kann zwischen 10 und 200 cm$^{-2}$ betragen.

Die Beschichtungskonzentration der Gesamtbeschichtung beträgt bevorzugt 100 bis 400 g/l Volumen des Wabenkörpers. Dabei sollte der Anteil der zweiten Funktionsschicht an der Gesamtbeschichtung 10 bis 50 Gew.-% ausmachen. Übersteigt der Anteil der zweiten Funktionsschicht 50 Gew.-%, so verschlechtert sich zunehmend die Diffusion der Stickoxide durch diese Schicht zu den Speicherverbindungen der ersten Schicht. Liegt der Anteil der zweiten Funktionsschicht unter 10 Gew.-%, so ist ihre Speicherkapazität für die Kohlenwasserstoffe nicht mehr ausreichend, um genügend Kohlenwasserstoffe für die spätere Reduktion der freigesetzten Stickoxide bereitzustellen.

Für die katalytischen Aktivität eines beschichteten Katalysatorkörpers ist neben der Gesamtmasse an katalytisch aktiver Substanz ihre geometrische Anordnung auf dem Katalysatorkörper wichtig. Es hat sich gezeigt, daß die katalytische Aktivität eines Katalysators bei vorgegebener Beschichtungsmenge im allgemeinen höher ist, wenn die Beschichtung auf eine größere geometrische Oberfläche aufgebracht wird. Eine größere geometrische Oberfläche kann entweder durch ein größeres Volumen des Katalysatorkörpers oder durch eine höhere Zelldichte zur Verfügung gestellt werden. Bei einem üblichen keramischen Wabenkörper für Katalysatoren mit einer Zelldichte von 62 cm$^{-2}$ beträgt das Verhältnis seiner geometrischen Oberfläche $O_{Kat}$ zum Volumen $V_{Kat}$ etwa 2,4 m$^2$/l.

Für den erfindungsgemäßen Katalysator sollte das Verhältnis seiner geometrischen Oberfläche zum Hubraumvolumen $V_{Hub}$ des Dieselmotors Werte zwischen 1 und 10 m$^2$/l aufweisen. Werte von unter 1 m$^2$/l liefern im allgemeinen eine unzureichende katalytische Aktivität. Mit zunehmendem Verhältnis der geometrischen Katalysatoroberfläche zum Hubraumvolumen wird die Abgasreinigung verbessert. Die erzielbaren Verbesserungen werden jedoch mit wachsendem Verhältnis geringer. Verhältnisse oberhalb von 10 m$^2$/l sind daher aus räumlichen und auch aus Kostengründen wenig sinnvoll.

In den folgenden Beispielen wurden erfindungsgemäße Katalysatoren und Vergleichskatalysatoren auf offenzelligen Tragkörpern aus Cordierit mit den untenstehenden Abmessungen aufgebracht:

| | |
|---|---|
| Durchmesser | 14,37 cm |
| Länge Zelldichte | 15,24 cm$^{-2}$ 62 cm$^{-2}$ |

(fortgesetzt)

| Wandstärke | 0,2 mm |
|---|---|
| Volumen | 2,5 l |
| geometrische Oberfläche | 6 m$^2$ |

**Vorversuch:**

In einem Vorversuch wurde die Oxidation von Stickstoffmonoxid zu Stickstoffdioxid in Abhängigkeit von der Formulierung des Katalysators für die zweite Funktionsschicht untersucht. Hierzu wurden drei Wabenkörper mit folgenden Katalysatorformulierungen beschichtet:

1. Katalysator:   100 g/l γ-Al$_2$O$_3$ + 3,5 g/l Pt;
Das Aluminiumoxid besaß eine spezifische Oberfläche von 140 m$^2$/g. Es wurde vor der Beschichtung des Wabenkörpers mit einer Platinsalzlösung imprägniert und 4 Stunden bei 300°C calciniert.

2. Katalysator:   100 g/l mit Silicium dotiertes Aluminium-oxid (5 Gew.-% SiO$_2$; 95 Gew.-% Al$_2$O$_3$; 150 m$^2$/g). Die Herstellung erfolgte wie beim ersten Katalysator.

3. Katalysator:   100 g/l mit Silicium dotiertes Aluminium-oxid (40 Gew.-% SiO$_2$; 40 Gew.-% Al$_2$O$_3$; 150 m$^2$/g). Die Herstellung erfolgte wie beim ersten Katalysator.

Aus den drei Katalysatoren wurden Probekörper ausgebohrt und in einer Synthesegasanlage mit einem synthetischen Abgasgemisch der folgenden Zusammensetzung belastet:

| Stickstoffmonoxid: | 270 Vol.-ppm |
|---|---|
| Propen : | 90 Vol.-ppm |
| Kohlenmonoxid : | 350 Vol.-ppm |
| Wasserstoff : | 116 Vol.-ppm |
| Schwefeldioxid : | 20 Vol.-ppm |
| Sauerstoff : | 6 Vol.-% |
| Wasserdampf : | 10 Vol.-% |
| Kohlendioxid : | 10 Vol.-% |
| Stickstoff : | Rest |

Die Gasmischung wurde mit einer Raumgeschwindigkeit von 100000 h$^{-1}$ durch die Probekörper geleitet und mit einer Rate von 15°C/min von Raumtemperatur auf 500°C aufgeheizt. Hinter den Probekörpern wurde die Konzentration des gebildeten Stickstoffdioxids gemessen.

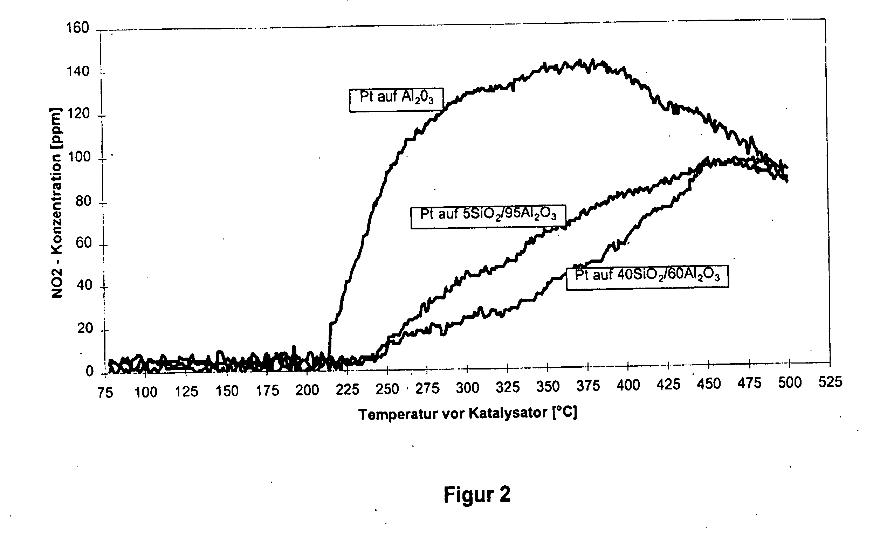

Figur 2 zeigt die erhaltenen Meßkurven. Unterhalb von 200°C durchquert Stickstoffmonoxid die Katalysatoren ohne zu Stickstoffdioxid oxidiert zu werden. Oberhalb von etwa 210°C setzt bei Katalysator 1 mit reinem γ-Aluminiumoxid als Trägermaterial für Platin die Bildung von Stickstoffdioxid ein.

Katalysator 2 mit einem mit 5 Gew.-% Silicium dotierten Aluminiumoxid als Trägermaterial weist eine wesentlich geringere Neigung zur Bildung von Stickstoffdioxid auf. Dies kann auf die höhere Acidität dieses Trägermaterials zurückgeführt werden. Eine weitere Verringerung der Bildung von Stickstoffdioxid wird bei Katalysator 3 beobachtet, dessen Trägermaterial durch einen Gehalt an 40 Gew.-% Siliciumdioxid noch saurer ist als das Trägermaterial von Katalysator 2.

Für die Zwecke der vorliegenden Erfindung ist daher reines Aluminiumoxid als Trägermaterial für die katalytisch aktive Komponente der zweiten Funktionsschicht wenig geeignet. Günstiger sind die sauren Trägermaterialien der Katalysatoren 2 und 3. Sie führen zu einer verminderten Oxidationswirkung des Platins auf Stickstoffmonoxid. Das im Abgas enthaltene Stickstoffmonoxid kann also die zweite Funktionsschicht nahezu unverändert durchqueren. In der ersten Funktionsschicht wird es dann durch Physisorption lose gebunden.

**Vergleichsbeispiel 1:**

Es wurde ein Reduktionskatalysator analog zu Beispiel 1 aus der DE 196 14 540 A1 wie folgt hergestellt.
Aluminiumsilikat mit 5 Gew.-% Siliziumdioxid (spezifische Oberfläche, gemessen nach DIN 66132: 286 m$^2$/g) wurde mit Platin aktiviert. Hierzu wurde das Aluminiumsilikat mit einer wäßrigen Lösung von Tetraamminplatin(II)hydroxid unter ständigem Rühren in Kontakt gebracht, so daß ein feuchtes, rieselfähiges Pulver entstand. Nach zwölfstündiger Trocknung bei 120°C in Luft wurde das entstandene Pulver für zwei Stunden bei 300°C in Luft calciniert. Anschließend wurde das Pulver bei 500°C für die Dauer von zwei Stunden im strömenden Formiergas (95 Vol.-% $N_2$ und 5 Vol.-% $H_2$) reduziert. Das so hergestellte Platin/Aluminiumsilikat-Pulver enthielt, bezogen auf sein Gesamtgewicht, 3,4 Gew.-% Platin.

Aus dem vorgefertigten Platin/Aluminiumsilikat-Pulver wurde eine wäßrige Beschichtungsdispersion mit einem Feststoffgehalt von 40 Gew.-% angesetzt. Zu dieser Dispersion wurden folgende Zeolithpulver im Verhältnis 1:1:1:1:1 zugegeben: DAY (x = 200), Na-ZSM-5 (x > 1000), H-ZSM-5 (x = 120), H-ZSM-5 (x=40) und H-Mordenit (x=20).

Der vorgesehene Wabenkörper wurde durch Eintauchen in diese Beschichtungsdispersion beschichtet. Die Beschichtung wurde bei 120°C an Luft getrocknet und abschließend für zwei Stunden bei 500°C calciniert. Der fertige Katalysator enthielt pro Liter Katalysatorvolumen 140 g Oxide und 3,18 g Platin.

Die genaue Zusammensetzung der fertigen Beschichtung zeigt Tabelle 1. Die relative Anordnung der verschiedenen Komponenten zueinander ist durch das folgende Schema gegeben:

```
Si/Al₂O₃      + Pt       ⎫
H-Mordenit   (x=20)      ⎪
H-ZSM5       (x=40)      ⎬  Gesamtbeschichtung
H-ZSM5       (x=120)     ⎪
H-ZSM5       (x>1000)    ⎪
DAY          (x=200)     ⎭
```

**Vergleichsbeispiel 2:**

Es wurde ein Stickoxid-Speicherkatalysator auf einem Wabenkörper wie folgt hergestellt:

Aluminiumoxid (spezifische Oberfläche: 134 $m^2$/g) wurde mit Platin und Palladium aktiviert. Hierzu wurde das Aluminiumoxid mit einer wäßrigen Lösung bestehend aus Tetraamminplatin(II)nitrat und Palladium(II)nitrat unter ständigem Rühren in Kontakt gebracht, so daß ein feuchtes Platin/Palladium-Aluminiumoxid-Pulver mit einem Platingehalt von 1,23 Gew.-% und einem Palladiumgehalt von 0,71 Gew.-%, jeweils bezogen auf das Aluminiumoxid, entstand. Nach zweistündiger Trocknung bei 120°C in Luft wurde das Pulver für weitere zwei Stunden bei 300°C in Luft calciniert und anschließend im strömenden Formiergas bei 500°C für die Dauer von zwei Stunden reduziert.

Weiterhin wurde ein Cer/Zirkon-Mischoxid (70 Gew.-% Ceroxid; 30 Gew.-% Zirkonoxid; spezifische Oberfläche: 104 $m^2$/g) mit Rhodium imprägniert. Hierzu wurde eine Rhodium(III)nitrat-Lösung unter ständigem Rühren bei einem pH-Wert von 6 einer Dispersion des Mischoxids mit einem Feststoffgehalt von 40 Gew.-% während eines Zeitraumes von 15 Minuten zugefügt. Nach weiteren 15 Minuten wurde die Dispersion abfiltriert. Der Feststoff wurde für zwei Stunden bei 120°C in Luft getrocknet und für vier Stunden bei 300°C in Luft calciniert. Das auf diese Weise hergestellte Rhodium-Cer/Zirkon-Mischoxidpulver wies einen Rhodiumgehalt von 1,59 Gew.-%, bezogen auf das Cer/Zirkon-Mischoxid, auf.

Aus den beiden vorgefertigten Pulvern wurde eine wäßrige Beschichtungsdispersion mit einem Feststoffgehalt von 40 Gew.-% angesetzt. Zusätzlich wurde Magnesiumacetat entsprechend einem Magnesiumoxidanteil von 7,85 Gew.-%, bezogen auf den Gesamtfeststoffgehalt, zugefügt.

Der Wabenkörper wurde durch Eintauchen in diese Beschichtungsdispersion beschichtet. Die Beschichtung wurde bei 120°C an Luft getrocknet und abschließend für zwei Stunden bei 500°C calciniert. Danach wurde der beschichtete Wabenkörper mit einer wäßrigen Lösung von Bariumacetat imprägniert, erneut bei 120°C im Trockenschrank für zwei Stunden getrocknet und anschließend für zwei Stunden bei 500°C calciniert.

Die genaue Zusammensetzung der fertigen Beschichtung zeigt Tabelle 1. Die relative Anordnung der verschiedenen Komponenten zueinander ist durch das folgende Schema gegeben:

$$Al_2O_3 \quad + Pt + Pd \rbrace$$
$$Ce/ZrO_2 \quad + Rh \rbrace \quad + MgO + BaO$$

### Beispiel 1:

Es wurde ein erfindungsgemäßer Katalysator mit zwei Funktionsschichten hergestellt.

Als erste Funktionsschicht wurde der Speicherkatalysator von Vergleichsbeispiel 2 aufgebracht. Der Oxidgehalt wurde proportional um den Faktor 0,78 gegenüber Vergleichsbeispiel 2 vermindert. Die Beschichtung wurde bei 120°C an Luft getrocknet und abschließend für 2 h bei 500°C calciniert.

Als zweite Funktionsschicht wurde der Reduktionskatalysator von Vergleichsbeispiel 1 aufgebracht. Der Oxidgehalt wurde gegenüber Vergleichsbeispiel 1 um den Faktor 0,71 vermindert. Die Platinbeladung der zweiten Funktionsschicht betrug 3,18 g/l. Die Beschichtung wurde bei 120°C an Luft getrocknet, für vier Stunden bei 300°C calciniert und abschließend für zwei Stunden bei 500°C unter Formiergas reduziert.

### Beispiel 2:

Es wurde ein weiterer erfindungsgemäßer Katalysator hergestellt.

Als erste Funktionsschicht wurde der Speicherkatalysator von Vergleichsbeispiel 2 verwendet. Der Oxidgehalt wurde proportional um den Faktor 0,78 gegenüber Vergleichsbeispiel 2 vermindert. Die Beschichtung wurde bei 120°C an Luft getrocknet und abschließend für zwei Stunden bei 500°C calciniert.

Die zweite Funktionsschicht wurde wie folgt hergestellt:

Eine Feststoffmischung aus 85 Gew.-% Aluminiumsilikat (5 Gew.-% Siliziumdioxid; spezifische Oberfläche: 147 m$^2$/g) und 15 Gew.-% dealuminiertem Zeolith Y (x = 200) wurde mit Platin aktiviert. Hierzu wurde die Feststoffmischung mit einer wäßrigen Lösung von Ethanolaminplatin(IV)hydroxid unter ständigem Rühren in Kontakt gebracht, so daß ein feuchtes, rieselfähiges Pulver entstand. Nach zwölfstündiger Trocknung bei 120°C in Luft wurde das entstandene Pulver für vier Stunden bei 300°C in Luft calciniert und bei 500°C für die Dauer von zwei Stunden unter Formiergas reduziert. Das so mit Platin aktivierte Pulvergemisch enthielt 2,65 Gew.-% Platin, bezogen auf das Gewicht des Aluminiumsilicats.

Unter Verwendung dieses Pulvers wurde eine wäßrige Beschichtungsdispersion mit einem Feststoffgehalt von 40 Gew.-% angesetzt. Ein Wabenkörper wurde durch Eintauchen in die Beschichtungsdispersion beschichtet. Die Beschichtung wurde bei 120°C an Luft getrocknet, für vier Stunden bei 300°C calciniert und abschließend für zwei Stunden bei 500°C unter Formiergas reduziert. Die Zusammensetzung des fertigen Katalysators zeigt Tabelle 1.

Die relative Anordnung der verschiedenen Komponenten der zweiten Funktionsschicht zueinander ist durch das folgende Schema gegeben:

$$Si/Al_2O_3 \quad + Pt \rbrace$$
$$DAY \quad (x=200) \rbrace \quad Gesamtbeschichtung$$

Obwohl das Pulvergemisch insgesamt mit Platin imprägniert wurde, schied sich das Platin zum überwiegenden Teil nur auf dem Aluminiumsilicat ab.

### Beispiel 3:

Es wurde ein weiterer erfindungsgemäßer Katalysator angefertigt. Die erste Funktionsschicht wurde folgendermaßen hergestellt:

Ein Zirkondioxidpulver (spezifische Oberfläche: 103 m$^2$/g) wurde mit 10,64 Gew.-% CeO$_2$, 9,50 Gew.-% La$_2$O$_3$ und 3,8 Gew.-% Pd imprägniert. Hierzu wurde eine wäßrige Lösung bestehend aus Cer(III)nitrat, Lanthan(III)nitrat und Palladium(II)nitrat mit den entsprechenden Gewichtsverhältnissen auf das Zirkondioxidpulver unter ständigem Umrühren aufgebracht, so daß ein feuchtes imprägniertes Zirkondioxidpulver entstand. Nach zweistündiger Trocknung bei 150°C in Luft wurde das entstandene Pulver für zwei Stunden bei 600°C in Luft calciniert.

Es wurde eine wäßrige Beschichtungsdispersion mit einem Feststoffgehalt von 40 Gew.-% unter Verwendung des imprägnierten Zirkonoxidpulvers, sowie von Aluminiumoxid (spezifische Oberfläche: 134 m$^2$/g) und Cer/Zirkon-Mischoxid (70/30; Oberfläche: 104 m$^2$/g) angefertigt. Der Anteil des Zirkonoxidpulvers an der Trockenmasse der Beschichtungsdispersion betrug 18,94 Gew.-%, von Aluminiumoxid 57,64 Gew.-% und von Cer/Zirkon-Mischoxid 10,80 Gew.-%. Zusätzlich wurde der Dispersion Bariumacetat entsprechend einem Gehalt an Bariumoxid von 12,62 Gew.-% zugefügt.

Wie bei den vorgehenden Beispielen wurde ein Wabenkörper mit dieser Beschichtungsdispersion beschichtet, die Beschichtung bei 120°C getrocknet und abschließend für die Dauer von zwei Stunden bei 500°C calciniert.

Danach wurde der beschichtete Wabenkörper mit einer wäßrigen Lösung aus Magnesiumnitrat und Tetraamminplatin(II)nitrat entsprechend 9,1 g/l Magnesiumoxid und 3 g/l Platin imprägniert, bei 120°C getrocknet und für die Dauer von zwei Stunden calciniert. Als zweite Funktionsschicht wurde die zweite Funktionsschicht von Beispiel 2 aufgebracht. Die Zusammensetzung der fertigen Katalysatorbeschichtung ist in Tabelle 1 aufgelistet.

Die relative Anordnung der verschiedenen Komponenten der ersten Funktionsschicht zueinander ist durch das folgende Schema gegeben:

$$\left.\begin{array}{l} Al_2O_3 \qquad\qquad\qquad\qquad + BaO \\ ZrO_2 \quad + Pd + CeO_2 + La_2O_3 + BaO \\ Ce/ZrO_2 \qquad\qquad\qquad + BaO \end{array}\right\} + MgO + Pt$$

### Beispiel 4:

Es wurde ein weiterer erfindungsgemäßer Katalysator angefertigt. Die erste Funktionsschicht wurde folgendermaßen hergestellt:

Die Beschichtung wurde unter Verwendung von drei unterschiedlichen oxidischen Pulvern hergestellt. Bei den drei Pulvern handelte es sich um:

- Pulver 1: Aluminiumoxid imprägniert mit Platin
- Pulver 2: Cer/Zirkon-Mischoxid imprägniert mit Rhodium
- Pulver 3: Ceroxid imprägniert mit Bariumoxid

Die Präparation dieser drei Pulver wurde wie folgt vorgenommen:

**Pulver 1:**

Aluminiumoxid (spezifische Oberfläche 134 m$^2$/g) wurde unter ständigem Umrühren mit Ethanolaminplatin (IV)-hydroxid in Kontakt gebracht, so daß ein feuchtes, rieselfähiges Pulver entstand. Nach zwölfstündiger Trocknung bei 120°C in Luft wurde das entstandene Pulver für zwei Stunden bei 300°C in Luft calciniert. Anschließend erfolgte eine Reduktion unter Formiergas bei 500°C für die Dauer von zwei Stunden. Das so hergestellte Platin/Aluminiumoxidpulver enthielt 3,5 Gew.-% Platin, bezogen auf Aluminiumoxid.

**Pulver 2:**

Es wurde eine Dispersion mit 40 Gew.-% eines Cer/Zirkon-Mischoxids (70/30; 104 m$^2$/g) angefertigt. In diese Dispersion wurde eine Rhodium(III)nitrat-Lösung bei einem pH-Wert von 6 während der Dauer von 15 Minuten eingerührt. Nach weiteren 15 Minuten wurde die Dispersion abfiltriert. Der Feststoff wurde für zwei Stunden bei 120°C in Luft getrocknet und für vier Stunden bei 300°C in Luft calciniert. Das auf diese Weise hergestellt Rhodium-Cer/Zirkon-Mischoxidpulver wies einen Rhodiumgehalt von 1,59 Gew.-%, bezogen auf das Mischoxid, auf.

**Pulver 3:**

Ceroxid (spezifische Oberfläche 104 m$^2$/g) wurde unter ständigem Umrühren mit einer wäßrigen Lösung aus Bariumacetat (15,48 Gew.-% Bariumoxid) imprägniert. so daß ein feuchtes, rieselfähiges Pulver entstand. Nach zwölfstündiger Trocknung bei 120°C in Luft wurde das Pulver für 2 h bei 500°C in Luft calciniert.

Aus den 3 Pulvern wurde eine wäßrige Beschichtungsdispersion mit einem Feststoffgehalt von 40 Gew.-% angesetzt. Der Anteil von Pulver 1 an der Trockenmasse betrug 40,50 Gew.-%, von Pulver 2 8,6 Gew.-% und von Pulver 3 50,9 Gew.-%.

Mit dieser Beschichtungsdispersion wurde ein Wabenkörper beschichtet. Die Beschichtung wurde bei 120°C an Luft getrocknet und abschließend für zwei Stunden bei 500°C calciniert.

Als zweite Funktionsschicht wurde wie schon in Beispiel 3 die zweite Funktionsschicht von Beispiel 2 aufgebracht. Die genaue Zusammensetzung der fertigen Beschichtung zeigt Tabelle 1.

Die relative Anordnung der verschiedenen Komponenten der ersten Funktionsschicht zueinander ist durch das folgende Schema gegeben:

$$
\left.
\begin{array}{ll}
Al_2O_3 & + \ Pt \\
CeO_2 & + \ BaO \\
Ce/ZrO_2 & + \ Rh
\end{array}
\right\} \quad \text{erste Funktionsschicht}
$$

**Tabelle 1:** Zusammensetzung der Katalysatoren

| Rohstoff | Vergleichsbeispiel 1 | Vergleichs beispiel 2 | Beispiel 1 | Beispiel 2 | Beispiel 3 | Beispiel 4 |
|---|---|---|---|---|---|---|
| **zweite Funktionssehicht** | [g/l] | [g/l] | [g/l] | [g/l] | [g/l] | [g/l] |
| Aluminiumsilikat | 93,5 | --- | 66,4 | 85,2 | 85,2 | 85,2 |
| H-Mordenit (x = 20) | 9,3 | --- | 6,6 | --- | --- | --- |
| H-ZSM5 (x = 40) | 9,3 | --- | 6,6 | --- | --- | --- |
| H-ZSM5 (x = 120) | 9,3 | --- | 6,6 | --- | --- | --- |
| H-ZSM5 (x > 1000) | 9,3 | --- | 6,6 | --- | --- | --- |
| DAY (x = 200) | 9,3 | --- | 6,6 | 14,2 | 14,2 | 14,2 |
| Oxidgehalt | 140 | --- | 99,4 | 99,4 | 99,4 | 99,4 |
| Platin | 3,18 | --- | 3,18 | 3,18 | 3,18 | 3,18 |
| **erste Funktionsschicht** | | | | | | |
| Aluminiumoxid | --- | 174 | 135,7 | 135,7 | 107,2 | 78 |
| Zirkondioxid | --- | --- | --- | --- | 26,8 | |
| Ceroxid | --- | --- | --- | --- | 3,8 | 85,8 |
| Cer/Zirkon-Mischoxid | --- | 22 | 17,2 | 17,2 | 20,1 | 16,9 |
| Lanthanoxid | --- | --- | --- | --- | 3,4 | |
| Bariumoxid | --- | 35 | 27, 3 | 27,3 | 23,5 | 15,6 |
| Magnesiumoxid | --- | 20 | 15,6 | 15,6 | 6,1 | |
| Oxidgehalt | --- | 251 | 195,8 | 195,8 | 190,9 | 196,3 |
| Platin | --- | 2,14 | 2,14 | 2,14 | 3 | 3,5 |
| Palladium | --- | 1,23 | 1,23 | 1,23 | 2 | |
| Rhodium | --- | 0,35 | 0,35 | 0,35 | | 0,35 |
| **Gesamtbeladung** | | | | | | |

## Anwendungsbeispiel 1

Die katalytische Aktivität der Abgasreinigungskatalysatoren der vorstehenden Beispiele wurde an einer Synthesegasanlage bestimmt. Mit dieser Anlage ist es möglich, alle im realen Abgas eines Diesel- oder Otto-Motors vorhandenen gasförmigen Abgaskomponenten nachzubilden. Die gewählten Prüfbedingungen und die Modellgaszusammensetzung sind in Tabelle 2 aufgelistet.

Als Prüflinge wurden Bohrkerne der entsprechenden Katalysatoren mit 25 mm Durchmesser und 76 mm Länge gewählt. Bei Hintereinanderschaltung zweier Prüflinge wurden die Prüflinge halbiert, um das zur Überprüfung verwendete Katalysatorvolumen konstant zu halten.

Zur Messung der im Abgas enthaltenen Gaskomponenten wurden die in Tabelle 3 angegebenen Meßgeräte verwendet.

Zur Bestimmung der Anspringtemperaturen wurde das Abgas mit einer Aufheizrate von 15°C/min erwärmt. Die Prüflinge wurden zunächst in der in Tabelle 6 beschriebenen Abgasmischung für eine Stunde bei 400°C konditioniert. Die gemessenen katalytischen Aktivitäten von ausgewählten Katalysatorkominationen sind in Tabelle 4 aufgeführt.

**Tabelle 2:** Prüfbedingungen und Modellgaszusammensetzung zur Bestimmung der Umsetzungsraten der Schadstoffe CO, HC und $NO_x$ in der Synthesegasanlage.

| Komponente | Konzentration |
|---|---|
| CO | 350 [vppm] |
| $H_2$ | 117 [vppm] |
| $HC_1$ * | 270 [ppmC$_1$] |
| $SO_2$ | 20 [vppm] |
| NO | 270 [vppm] |
| $O_2$ | 10 [Vol.-%] |
| $H_2O$ | 10 [Vol.-%] |
| $CO_2$ | 10 [Vol.-%] |
| $N_2$ | Rest |
| Gasmenge | 1950 [Nl/h] |
| Katalysatorgröße | Ø 25 mm x 76 mm |
| Raumgeschwindigkeit | 50000 [h$^{-1}$] |
| Aufheizungsrate | 15 [°C/min] |

$HC_1$*: als Kohlenwasserstoffkomponente wurde ein Gemisch aus Propen und Propan im Molverhältnis 1:1 verwendet. Die Angaben in Tabelle 5 beziehen sich auf ein Kohlenstoffatom.

**Tabelle 3:** Zusammenstellung der Meßgeräte zur Messung der Abgaskonzentration im Synthesegasteststand

| Analysiertes Gas | Meßgerät | Hersteller |
|---|---|---|
| $O_2$ | Oxymat | Siemens AG |
| Kohlenwasserstoff | FID . | Pierburg Meßtechnik |
| $NO_x$ | CLD 700 Elht | Zellweger ECO-Systeme |
| CO | Binos | Rosemount |
| $CO_2$ | Binos | Rosemount |
| | Binos | Rosemount |
| $SO_2$ | | |

**Tabelle 4** Schadstoffumsetzung der Katalysatoren nach einer einstündigen Konditionierung bei 400°C im Synthesegas

| Beispiel | $NO_x$-Temperatur-fenster [1] | Temperatur der maximalen $NO_x$-Umsetzung | maximale $NO_x$-Umsetzung | $T_{50,CO}$[2] | $T_{50,HC}$[3] |
|---|---|---|---|---|---|
| | [°C] | [°C] | [%] | [°C] | [°C] |
| VB1 | 190 - 220 | 200 | 30 | 135 | 165 |
| VB2 | 180 - 220 | 205 | 35 | 185 | 198 |
| B1 | 161 - 242 | 193 | 52 | 152 | 178 |
| B2 | 165 - 245 | 194 | 53 | 150 | 173 |

(fortgesetzt)

| Beispiel | $NO_x$-Temperatur-fenster [1] | Temperatur der maximalen $NO_x$-Umsetzung | maximale $NO_x$-Umsetzung | $T_{50,CO}$[2] | $T_{50,HC}$[3] |
|---|---|---|---|---|---|
| | [°C] | [°C] | [%] | [°C] | [°C] |
| B3 | 167 - 250 | 195 | 57 | 148 | 176 |
| B4 | 160 - 270 | 180 | 60 | 144 | 174 |

[1]) Katalysatoren auf Edelmetallbasis weisen einen bestimmten Temperaturbereich auf, in dem Stickoxide konvertiert werden. Dieser Bereich wird als Temperaturfenster bezeichnet. Das Temperaturfenster in diesem Anwendungsbeispiel ist so definiert, daß an den Temperaturgrenzen ein 20 %iger $NO_x$-Umsatz stattfindet.
Temperatur, bei der 50 % CO-Umsatz erreicht wird
Temperatur, bei der 50 % HC-Umsatz erreicht wird

### Anwendungsbeispiel 2

Die katalytische Aktivität ausgewählter Katalysatoren wurde zusätzlich am Fahrzeug überprüft. Als Prüffahrzeug diente ein PKW mit einem 1.9 L DI Motor und einer Leistung von 81 kW. Die Fahrzeugrollenprüfungen wurden mit einem nach Euro 2 Standard vorgeschriebenen, handelsüblichen Dieseltreibstoff mit einem Schwefelgehalt unter 500 Gew.-ppm durchgeführt. Die verwendeten Analysatoren zur Bestimmung der Schadstoffemissionen entsprachen denen von Anwendungsbeispiel 1 (siehe Tabelle 3).

Die Ergebnisse dieser Prüfungen nach einer Alterung der Katalysatoren für die Dauer von 6 Stunden bei einer Abgastemperatur von 350°C sind in Tabelle 5 aufgelistet. Der erfindungsgemäße Katalysator nach Beispiel 3 zeigt eine Verminderung der Stickoxide gegenüber gegenüber der Rohemission in der Zeile "ohne Kat." von etwa 25%, während die Katalysatoren der Vergleichsbeispiele VB1 und VB2 die Stickoxide nur etwa um 13% gegenüber der Rohemission vermindern.

**Tabelle 5:** Schadstoffemissionen im MVEG-A Prüfzyklus nach einer sechstündigen Motoralterung der Katalysatoren bei 350°C an einem PKW mit 1.9 L DI Motor

| Beispiel | $O_{Kat}/V_{Hub}$ [m²/l] | Emissionen im MVEG-A Prüfzyklus [g/km] | | | |
|---|---|---|---|---|---|
| | | $NO_x$ | CO | HC | Partikel |
| ohne Kat. | | 0,69 | 0,72 | 0,15 | 0,058 |
| VB1 | 6,32 | 0,62 | 0,13 | 0,02 | 0,038 |
| VB2 | 6,32 | 0,60 | 0,43 | 0,08 | 0,050 |
| B3 | 6,32 | 0,52 | 0,07 | 0,02 | 0,038 |

### Patentansprüche

1. Katalysator für die Reinigung der Abgases eines Dieselmotors enthaltend zwei übereinanderliegende Funktionsschichten auf einem inerten Tragkörper, wobei die erste direkt auf dem Tragkörper liegende Schicht eine Stickoxid-Speicherfunktion aufweist und die zweite, direkt mit dem Abgas in Kontakt stehende Schicht, eine katalytische Funktion besitzt, wobei
die zweite Funktionsschicht zusätzlich eine Kohlenwasserstoff-Speicherfunktion aufweist und ihre katalytische Funktion durch katalytisch aktive Edelmetalle der Platingruppe bereitgestellt wird, die in hochdisperser Form auf feinteiligen, sauren Trägermaterialien abgeschieden sind, **dadurch gekennzeichnet, daß** die zweite Funktionsschicht zur Speicherung von Kohlenwasserstoffen wenigstens einen Zeolithen in der sauren H-Form mit einem Molverhältnis von Siliciumdioxid zu Aluminiumoxid von mehr als 20 enthält sowie wenigstens ein saures Trägermaterial, wobei als saures Trägermaterial ein Aluminiumsilicat, Siliciumdioxid, Titanoxid oder Zirkonoxid oder Mischungen davon eingesetzt werden.

2. Katalysator nach Anspruch 1, **dadurch gekennzeichnet, daß**
auf dem sauren Trägermaterial als Katalytisch aktive Komponente mindestens ein Edelmetall der Platingruppe aufgebracht ist.

**3.** Katalysator nach Anspruch 1,
**dadurch gekennzeichnet,**
**daß** die zweite Funktionsschicht einen dealuminierten Y-Zeolithen, einen Zeolithen ZSM5 oder einen dealuminierten Mordenit oder Mischungen davon enthält.

**4.** Katalysator nach Anspruch 2 oder 3,
**dadurch gekennzeichnet,**
**daß**, auf dem sauren Trägermaterial als Katalytisch aktive Komponenten Platin oder Palladium oder Mischungen davon in hochdisperser Form abgeschieden sind.

**5.** Katalysator nach Anspruch 4,
**dadurch gekennzeichnet,**
**daß** als saures Trägermaterial ein Aluminiumsilicat mit einem Siliciumdioxidgehalt von 1 bis 10 Gew.-%, bezogen auf das Gesamtgewicht des Aluminiumsilicats, verwendet wird.

**6.** Katalysator nach Anspruch 1,
**dadurch gekennzeichnet,**
**daß** die erste Funktionsschicht zur Stickoxidspeicherung wenigstens eine Stickoxid-Speicherverbindung aus der Gruppe der Alkalimetalle, der Erdalkalimetalle und der Seltenerdmetalle enthält.

**7.** Katalysator nach Anspruch 6,
**dadurch gekennzeichnet,**
**daß** die erste Funktionsschicht zusätzlich basische Oxide der Übergangsmetalle aus der Gruppe Mangan, Cobalt, Kupfer, Zink, Zinn, Blei, Zirkon, oder Kombinationen davon enthält.

**8.** Katalysator nach Anspruch 6,
**dadurch gekennzeichnet,**
**daß** in der ersten Funktionsschicht die Stickoxid-Speicherverbindungen in hochdisperser Form auf einem oder mehreren Trägermaterialien vorliegen.

**9.** Katalysator nach Anspruch 7,
**dadurch gekennzeichnet,**
**daß** in der ersten Funktionsschicht wenigstens eines der Trägermaterialien für die Stickoxid-Speicherverbindungen ein Trägermaterial auf der Basis von Ceroxid ist.

**10.** Katalysator nach Anspruch 8,
**dadurch gekennzeichnet,**
**daß** es sich bei dem Trägermaterial auf der Basis von Ceroxid um Ceroxid oder um ein Cer/Zirkon-Mischoxid mit einem Zirkonoxid-Gehalt, bezogen auf das Gesamtgewicht des Mischoxids, von 1 bis 30 Gew.-% handelt.

**11.** Katalysator nach Anspruch 1,
**dadurch gekennzeichnet,**
**daß** die erste Funktionsschicht zusätzlich wenigstens ein katalytisch aktives Edelmetall aus der Platingruppe enthält.

**12.** Katalysator nach Anspruch 1,
**dadurch gekennzeichnet,**
**daß** die beiden Funktionsschichten in einer Gesamtkonzentration von 100 bis 400 g/l auf dem Tragkörper vorliegen.

**13.** Katalysator nach Anspruch 12,
**dadurch gekennzeichnet,**
**daß** der Gewichtsanteil der zweiten Funktionsschicht 10 bis 50% der Gesamtbeschichtung ausmacht.

**14.** Verfahren zur Reinigung des Abgases eines Dieselmotors, welches während der überwiegenden Betriebsdauer des Motors eine Luftzahl über 1 aufweist,
**dadurch gekennzeichnet,**
**daß** das Abgas durch einen Katalysator nach einem der Ansprüche 1 bis 11 geführt wird, der an einem Ort der Abgasanlage angeordnet ist, an dem die Abgastemperatur während der überwiegenden Betriebsdauer des Motors unter 400°C liegt.

**15.** Verfahren nach Anspruch 14,
**dadurch gekennzeichnet,**
**daß** das Verhältnis der geometrischen Oberfläche des Katalysatortragkörpers zum Hubraumvolumen des Dieselmotors zwischen 1 und 10 m$^2$/l liegt.

## Claims

**1.** Catalyst for cleaning up the exhaust gas of a diesel engine, comprising two superimposed functional layers on an inert support structure, whereby the first layer, which is situated directly on the support structure, has a nitrogen-oxide-storage function and the second layer, which is in direct contact with the exhaust gas, has a catalytic function, wherein
the second function layer additionally has a hydrocarbon-storage function and its catalytic function is provided by catalytically active noble metals of the platinum group which are deposited in highly dispersed form on finely divided, acidic carrier materials,
**characterized in that**
the second functional layer for storing hydrocarbons comprises at least one zeolite in the acidic H-form with a molar ratio of silicon dioxide to aluminium oxide of more than 20 as well as at least one acidic carrier material, wherein as acidic carrier material an aluminium silicate, silicon dioxide, titanium oxide or zirconium oxide or mixtures thereof are employed.

**2.** Catalyst according to claim 1,
**characterized in that**
on the acidic carrier material at least one noble metal of the platinum group is applied as catalytically active component.

**3.** Catalyst according to Claim 1,
**characterised in that**
the second functional layer comprises a de-aluminised Y-zeolite, a zeolite ZSM5 or a de-aluminised mordenite or mixtures thereof.

**4.** Catalyst according to claim 2 or 3,
**characterized in that**
on the acidic carrier material platinum or palladium or mixtures thereof are deposited in highly dispersed form as catalytically active components.

**5.** Catalyst according to Claim 4,
**characterised in that**
as acidic carrier material use is made of an aluminium silicate with a silicon-dioxide content from 1 to 10 wt.-%, relative to the total weight of the aluminium silicate, is used.

**6.** Catalyst according to Claim 1,
**characterised in that**
the first functional layer for the storage of nitrogen oxide comprises at least one nitrogen-oxide-storage compound from the group comprising the alkali metals, the alkaline-earth metals and the rare-earth metals.

**7.** Catalyst according to Claim 6,
**characterised in that**
the first functional layer additionally comprises basic oxides of the transition metals from the group comprising manganese, cobalt, copper, zinc, tin, lead, zirconium, or combinations thereof.

**8.** Catalyst according to Claim 6,
**characterised in that**
in the first functional layer the nitrogen-oxide-storage compounds are present in highly dispersed form on one or more carrier materials.

**9.** Catalyst according to Claim 7,
**characterised in that**
in the first functional layer at least one of the carrier materials for the nitrogen-oxide-storage compounds is a carrier material based on cerium oxide.

10. Catalyst according to Claim 8,
**characterised in that**
the carrier material based on cerium oxide is cerium oxide or a cerium/zirconium mixed oxide with a zirconium-oxide content, relative to the total weight of the mixed oxide, from 1 to 30 wt.-%.

11. Catalyst according to Claim 1,
**characterised in that**
the first functional layer additionally comprises at least one catalytically active noble metal from the platinum group.

12. Catalyst according to Claim 1,
**characterised in that**
the two functional layers are present on the support structure in an overall concentration from 100 to 400 g/l.

13. Catalyst according to Claim 10,
**characterised in that**
the proportion by weight of the second functional layer constitutes 10 to 50 % of the overall coating.

14. Process for cleaning up the exhaust gas of a diesel engine which exhibits an air/fuel ratio above 1 during the predominant operating period of the engine,
**characterised in that**
the exhaust gas is conducted through a catalyst according to any one of Claims 1 to 11 which is arranged at a location in the exhaust system where the exhaust-gas temperature lies below 400°C during the predominant operating period of the engine.

15. Process according to Claim 12,
**characterised in that**
the ratio of the geometrical surface of the support structure of the catalyst to the swept volume of the diesel engine is between 1 and 10 m$^2$/l.


**Revendications**

1. Catalyseur pour la purification des gaz d'échappement d'un moteur diesel comportant deux couches de fonction superposées sur un corps porteur inerte, la première couche directement sur le corps porteur ayant une fonction d'accumulation d'oxyde d'azote alors que la deuxième, directement en contact avec les gaz d'échappement, a une fonction catalytique,
la deuxième couche de fonction ayant en complément une fonction d'accumulation d'hydrocarbures et sa fonction catalytique étant fournie par des métaux nobles à action catalytique du groupe platine, qui sont séparés, sous forme hautement dispersée, sur des matières supports acides finement dispersées,
**caractérisé en ce que**
la deuxième couche de fonction contient au moins une zéolithe sous forme H acide ayant un rapport molaire entre le dioxyde de silicium et l'oxyde d'aluminium supérieur à 20 afin d'accumuler les hydrocarbures ainsi qu'au moins une matière support acide, et comme matière support acide on utilise un silicate d'aluminium, du dioxyde de silicium, de l'oxyde de titane ou de l'oxyde de zirconium ou des mélanges de ces substances.

2. Catalyseur selon la revendication 1,
**caractérisé en ce que**
comme composant à action catalytique au moins un métal noble du groupe platine est appliqué sur la matière support acide.

3. Catalyseur selon la revendication 1,
**caractérisé en ce que**
la deuxième couche de fonction contient une zéolithe Y désaluminée, une zéolithe ZSM5 ou une mordénite désaluminée ou bien des mélanges de ces substances.

4. Catalyseur selon la revendication 2 ou 3,

**caractérisé en ce que**

sur la matière support acide, comme composants à action catalytique, du platine ou du palladium, ou des mélanges de ces substances sont séparés sous forme hautement dispersée.

**5.** Catalyseur selon la revendication 4,
**caractérisé en ce que**
comme matière support acide, on utilise un silicate d'aluminium ayant une teneur en dioxyde de silicium de 1 à 10 % en poids, par rapport au poids total du silicate d'aluminium.

**6.** Catalyseur selon la revendication 1,
**caractérisé en ce que**
la première couche de fonction destinée à l'accumulation de l'oxyde d'azote, contient au moins un composé d'accumulation d'oxyde d'azote provenant du groupe des métaux alcalins, des métaux alcalino-terreux et des métaux de terres rares.

**7.** Catalyseur selon la revendication 6,
**caractérisé en ce que**
la première couche de fonction contient, en complément, des oxydes basiques des métaux de transition du groupe composé de manganèse, de cobalt, de cuivre, de zinc, d'étain, de plomb, de zirconium ou des combinaisons de ces substances.

**8.** Catalyseur selon la revendication 6,
**caractérisé en ce que**
dans la première couche de fonction, les composés d'accumulation d'oxyde d'azote se présentent sous forme hautement dispersée sur une ou plusieurs matières supports.

**9.** Catalyseur selon la revendication 7,
**caractérisé en ce qu'**
il y a une matière support à base d'oxyde de cérium dans la première couche de fonction d'au moins l'une des matières supports pour les composés d'accumulation d'oxyde d'azote.

**10.** Catalyseur selon la revendication 8,
**caractérisé en ce que**
la matière support à base d'oxyde de cérium est un oxyde de cérium ou un oxyde mixte de cérium et de zirconium ayant une teneur en oxyde de zirconium, par rapport au poids total d'oxyde mixte, de 1 à 30 % en poids.

**11.** Catalyseur selon la revendication 1,
**caractérisé en ce que**
la première couche de fonction contient, en complément, au moins un métal noble, à action catalytique, du groupe platine.

**12.** Catalyseur selon la revendication 1,
**caractérisé en ce que**
les deux couches de fonction se présentent dans une concentration totale de 100 à 400 g/l sur le corps porteur.

**13.** Catalyseur selon la revendication 12,
**caractérisé en ce que**
la fraction pondérale de la deuxième couche de fonction représente 10 à 50 % en poids du revêtement total.

**14.** Procédé de purification des gaz d'échappement d'un moteur diesel qui présente un indice d'air supérieur à 1 pendant la majeure partie du fonctionnement du moteur,
**caractérisé en ce que**
les gaz d'échappement passent par un catalyseur selon l'une quelconque des revendications 1 à 11, disposé dans le système d'échappement, à un endroit où la température des gaz d'échappement est inférieure à 400°C pendant la majeure partie du fonctionnement du moteur.

**15.** Procédé selon la revendication 14,
**caractérisé en ce que**

le rapport entre la surface géométrique du corps porteur du catalyseur et la cylindrée du moteur diesel est compris entre 1 et 10 m$^2$/l.

Abgas

Zweite Funktionsschicht

Erste Funktionsschicht

Tragkörper

**Figur 1**

**Figur 2**

EP 1 004 347 B1